# EUROPÄISCHE PATENTSCHRIFT

(11) **EP 2 345 169 B1**
(45) Veröffentlichungstag und Bekanntmachung des Hinweises auf die Patenterteilung: **26.12.2012**
(21) Anmeldenummer: 09759641.5
(22) Anmeldetag: 05.10.2009
(51) Int. Cl.: H04B 1/48, H04B 1/58

(54) **SENDE-/EMPFANGSEINRICHTUNG**
TRANSCEIVER
DISPOSITIF D ÉMISSION/RÉCEPTION

(30) Priorität: 15.10.2008 DE 102008051684
(43) Veröffentlichungstag der Anmeldung: 20.07.2011
(73) Patentinhaber: EADS Deutschland GmbH, 85521 Ottobrunn (DE)
(72) Erfinder: LORCH, Ralf, 89275 Elchingen (DE)
(74) Vertreter: Riegel, Werner
(86) Internationale Anmeldenummer: PCT/DE2009/001394
(87) Internationale Veröffentlichungsnummer: WO 2010/043198

(56) Entgegenhaltungen:
- US-A- 5 446 464
- US-A- 5 778 306
- US-A1- 2006 222 061
- US-A1- 2008 132 180
- US-A1- 2008 233 910

## Beschreibung

Die Erfindung betrifft eine Sende-/Empfangseinrichtung gemäß den Merkmalen des Oberbegriffs des Patentanspruchs 1.

Bei bekannten Sende-/Empfangseinrichtungen, insbesondere bei Sende-/Empfangseinrichtungen, welche in Jammersystemen zum Einsatz kommen, wird bei der Umschaltung zwischen Empfangsbetrieb und Sendebetrieb ein Leistungsschalter verwendet. Im Empfangsbetrieb wird bei Jammersystemen das zu störende Szenario aufgeklärt, d.h. die zu störenden Sendefrequenzen werden ermittelt. Im Sendebetrieb werden entsprechende Störsignale ausgesendet. Bei dem Leistungsschalter handelt es sich üblicherweise um einen Sende-/Empfangsumschalter (T/R-Switch), welcher in bekannten Einrichtungen als PIN-Diodenschalter ausgeführt ist.

Bei Jammersystemen mit hohen Leistungen sind Umschaltzeiten von einigen 10µs erforderlich. Zum Stören von Sendern mit schnell wechselnden Sendefrequenzen, so genannte Hopper, mit Sendefrequenz-Umschaltzeiten von bis zu 1000 Umschaltungen/Sekunde und bei reaktiven Jammer-Systemen, d.h. das Jammersystem reagiert direkt auf das Live-Szenario, reduzieren die genannten Umschaltzeiten eines Jammersystems die Jammer-Effizienz.

Aus US2008/0233910 A1 ist eine Sende-/Empfangseinrichtungen mit den Merkmalen des Oberbegriffs des geltenden Anspruchs 1 bekannt.

Weitere Sende-/Empfangseinrichtungen sind aus US 5,778,306 A, US 5,446,464 A, US 2006/222061 A1, US 2008/132180 A1 oder US 2008/233910 A1 bekannt.

Es ist Aufgabe der Erfindung eine Sende-/Empfangseinrichtung anzugeben, mit welcher die Umschaltzeiten zwischen Sende- und Empfangbetrieb deutlich gegenüber dem Stand der Technik reduziert werden können.

Diese Aufgabe wird mit den Merkmalen des Patentanspruchs 1 gelöst. Vorteilhafte Ausführungen sind Gegenstand von Unteransprüchen.

Die erfindungsgemäße Sende-/Empfangseinrichtung von HF-Signalen umfasst eine Antenne, einen Sender und einen Empfänger, wobei zwischen dem Sender und dem Empfänger und der Antenne ein erster Richtkopplers geschaltet ist, wobei ein erstes Tor des ersten Richtkopplers mit dem Sender, ein zweites Tor des ersten Richtkopplers mit der Antenne, ein drittes Tor des ersten Richtkopplers mit einem ersten Detektor und ein viertes Tor des ersten Richtkopplers mit dem Empfänger verbunden ist, wobei das erste Tor und das zweite Tor sowie das dritte Tor (und das vierte Tor des ersten Richtkopplers jeweils einen Hauptzweig bilden und das erste Tor und das dritte Tor sowie das zweite Tor und das vierte Tor des ersten Richtkopplers jeweils einen Koppelzweig bilden. Erfindungsgemäß sind zwischen dem vierten Tor des ersten Richtkopplers und dem Empfänger ein zweiter Richtkoppler geschaltet ist, wobei das vierte Tor des ersten Richtkopplers mit dem ersten Tor des zweiten Richtkopplers verbunden ist, das zweite Tor des zweiten Richtkopplers mit dem Empfänger, das dritte Tor des zweiten Richtkopplers mit einem Abschlusswiderstand und das vierte Tor des zweiten Richtkopplers mit einem zweiten Detektor verbunden ist, wobei das erste Tor und das zweite Tor sowie das dritte Tor und das vierte Tor des zweiten Richtkopplers jeweils einen Hauptzweig bilden und das erste Tor und das vierte Tor sowie das zweite Tor und das dritte Tor des zweiten Richtkopplers jeweils einen Koppelzweig bilden.

Durch geeignete Wahl des Koppelfaktors des ersten Richtkopplers ist es möglich, der erfindungsgemäßen Einrichtungen vorteilhafte Eigenschaften einzuprägen. Wird der Koppelfaktor z.B, zwischen 3 dB und 10 dB gewählt, so wird eine geringe Einfügedämpfung im Sendepfad zwischen Sender und Antenne erreicht. Bei dem genannten Koppelfaktor wird eine vertretbare Einfügedämpfung für den Empfänger erreicht.

Zweckmäßig können die Ausgänge des ersten Richtkopplers für hin- und rücklaufende Leistung für weitere vorteilhafte Ausführungen der Erfindung, z.B. für Schutzzwecke genutzt werden.

Die Erfindung sowie vorteilhafte Ausführungen werden im Folgenden anhand einer Zeichnung näher erläutert.

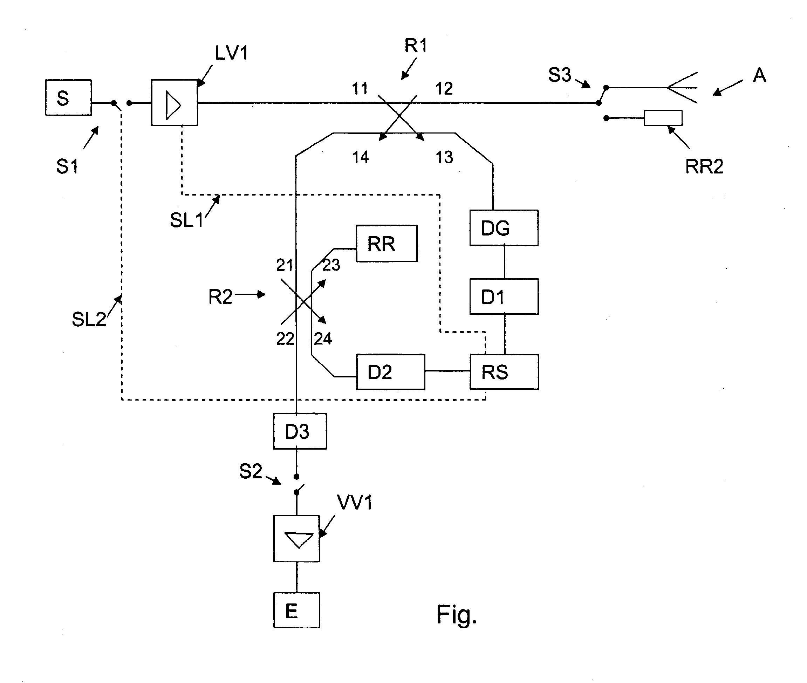

Die einzige Figur zeigt den Aufbau einer erfindungsgemäßen Sende-/Empfangseinrichtung.

In der Sende-/Empfangeinrichtung ist zwischen dem Sender S und dem Empfänger E und der Antenne A ein erster Richtkoppler R1 geschaltet.

Das erste Tor 11 des ersten Richtkopplers R1 ist über einen Leistungsverstärker LV1 und zweckmäßig über einen ersten Schalter S1 mit dem Sender S verbunden. Das zweite Tor 12 des ersten Richtkopplers R1 ist zweckmäßig über einen dritten Schalter S3 mit der Antenne A verbunden.

Das vierte Tor 14 des ersten Richtkopplers R1 ist erfindungsgemaß über einen zweiten Richtkoppler R2, ein Begrenzungsbauteil D3, einen zweiten Schalter S2 und einen Vorverstärker W1 mit dem Empfänger E verbunden. Das dritte Tor 13 des ersten Richtkopplers R1 ist zweckmäßig über ein Dämpfungsglied DG und einen ersten Detektor D1 mit einer Regelungsschaltung RS verbunden. Das Dämpfungsglied DG dient dabei der Pegelanpassung an den Detektor D1.

Das dritte Tor 23 des zweiten Richtkopplers R2 ist zweckmäßig mit einen Abschlusswiderstand RR mit zweckmäßig 50 Ohm verbunden. Das vierte Tor 24 des zweiten Richtkopplers R2 ist zweckmäßig über einen zweiten Detektor D2 mit der Regelungsschaltung RS verbunden.
Die Regelungsschaltung RS ist vorteilhaft über eine erste Signalleitung SL1 mit dem Leistungsverstärker LV1 verbunden. In einer weiteren vorteilhaften Ausführung ist die Regelungsschaltung RS über eine zweite Signalleitung SL2 mit dem ersten Schalter S1 verbunden.

Das Signal am ersten Detektor D1, welcher im Sendefall die zur Antenne laufende Leistung misst, kann für die Leistungsregelung des Leistungsverstärkers LV1 genutzt werden. Im Sendefall misst der zweite Detektor D2 die von der Antenne A zurücklaufende Leistung. Durch einen Vergleich der an den Detektor D1 und D2 gemessenen Leistung kann das Stehwellenverhältnis VSWR (VSWR - Voltage Standing Wave Ratio) bestimmt werden. Über die Regelschaltung RS kann dann z.B. bei einem zu hohem VSWR die Sendeleistung durch Regelung des Leistungsverstärkers LV1 reduziert werden. Im Fehlerfall kann aber auch möglich, dass über die zweite Signalleitung SL2 der erste Schalter S1 zur schnellen Leistungsabschaltung betätigt werden, falls z.B. das VSWR zu hoch ist.
Im Sendefall ist das Begrenzerbauteil D3 durchgeschaltet und bildet damit einen Kurzschluss. Aufgrund der im Sendefall am durchgeschalteten Begrenzerbauteil D3 auftretenden Reflektionen ist eine einem Fachmann bekannte Korrektur des Signals am Detektor D1 im Rahmen bekannter Verhältnisbildung nötig.

Der zweite Richtkoppler R2 im Signalpfad der zurücklaufenden Leistung bzw. im Empfangsfall des Empfangssignals, weist vorteilhaft einen hohen Koppelfaktor auf, z.B. zwischen 20 dB und 60 dB. Somit stellt der Richtkoppler R2 für den angeschlossenen Empfänger E eine vernachlässigbare Dämpfung dar. Gleichzeitig wird durch die hohe Dämpfung des Richtkopplers R2 der Pegel für den Detektor D2 angepasst.

Vor den Empfänger ist zweckmäßig ein Vorverstärker W1 zur Verstärkung des Empfangssignals im Empfangsfall geschaltet. Dadurch wird die Rauschzahl des Empfängers E, welche typischerweise bei 8 dB bis 13 dB liegt, um ca. 3 dB verbessert.

Zum zusätzlichen Schutz des Empfängers E kann ein zweiter Schalter S2 zwischen dem zweiten Richtkoppler R2 und dem Empfänger E, zweckmäßig dem Vorverstärker W1 geschaltet sein.

Zweckmäßig ist ein dritter Schalter S3 vorhanden, welcher zwischen dem ersten Richtkoppler R1 und der Antenne A geschaltet ist. Mittels dieses Schalters S3 ist es zu Wartungszwecken möglich, die Sendeleitung auf einen Abschlusswiderstand RR2 zuschalten.

## Patentansprüche

1. Sende-/Empfangseinrichtung von HF-Signalen umfassend eine Antenne (A), einen Sender (S) und einen Empfänger (E) und einer Einrichtung (R1) zum Umschalten zwischen Sender (S) und Empfänger (E), wobei zwischen dem Sender (S) und dem Empfänger (E) und der Antenne (A) ein erster Richtkoppler (R1) geschaltet ist, wobei ein erstes Tor (11) des ersten Richtkopplers (R1) mit dem Sender (S), ein zweites Tor (12) des ersten Richtkopplers (R1) mit der Antenne (A), ein drittes Tor (13) des ersten Richtkopplers (R1) mit einem ersten Detektor (D1) und ein viertes Tor (14) des ersten Richtkopplers (R1) mit dem Empfänger (E) verbunden ist, wobei das erste Tor (11) und das zweite Tor (12) sowie das dritte Tor (13) und das vierte Tor (14) des ersten Richtkopplers (R1) jeweils einen Hauptzweig bilden und das erste Tor (11) und das dritte Tor (13) sowie das zweite Tor (12) und das vierte Tor (14) des ersten Richtkopplers (R1) jeweils einen Koppelzweig bilden,
**dadurch gekennzeichnet, dass**
zwischen dem vierten Tor (14) des ersten Richtkopplers (R1) und dem Empfänger (E) ein zweiter Richtkoppler (R2) geschaltet ist, wobei das vierte Tor (14) des ersten Richtkopplers (R1) mit dem ersten Tor (21) des zweiten Richtkopplers (R2) verbunden ist, das zweite Tor (22) des zweiten Richtkopplers (R2) mit dem Empfänger (E), das dritte Tor (23) des zweiten Richtkopplers (R2) mit einem Abschlusswiderstand (RR) und das vierte Tor (24) des zweiten Richtkopplers (R2) mit einem zweiten Detektor (D2) verbunden ist,
wobei das erste Tor (21) und das zweite Tor (22) sowie das dritte Tor (23) und das vierte Tor (24) des zweiten Richtkopplers (R2) jeweils einen Hauptzweig bilden und das erste Tor (21) und das vierte Tor (24) sowie das zweite Tor (22) und das dritte Tor (23) des zweiten Richtkopplers (R2) jeweils einen Koppelzweig bilden.

2. Sende-/Empfangseinrichtung nach einem der vorangehenden Ansprüche,
**dadurch gekennzeichnet, dass**
zwischen dem Sender (S) und dem ersten Richtkoppler (R1) ein Leistungsverstärker (LV1) geschaltet ist.

3. Sende-/Empfangseinrichtung nach einem Ansprüche 1 und 2,
**dadurch gekennzeichnet, dass**
eine Regelungsschaltung (RS) vorhanden ist, welche mit dem ersten Detektor (D1) und dem zweiten Detektor (D2) verbunden ist.

4. Sende-/Empfangseinrichtung nach Anspruch 2 und 3,
**dadurch gekennzeichnet, dass**
zwischen der Regelungsschaltung (RS) und dem Leistungsverstärker (LV1) eine erste Signalleitung (SL1) vorhanden ist.

5. Sende-/Empfangseinrichtung nach einem der Ansprüche 2 bis 4,
**dadurch gekennzeichnet, dass**
zwischen dem Sender (S) und dem Leistungsverstärker (LV1) ein erster Schalter (S1) vorhanden ist.

6. Sende-/Empfangseinrichtung nach Ansprüchen 3 und 5,
**dadurch gekennzeichnet, dass**
zwischen der Regelungsschaltung (RS) und dem ersten Schalter (S1) eine zweite Signalleitung (SL2) vorhanden ist.

7. Sende-/Empfangseinrichtung nach einem der Ansprüche 1 bis 6,
**dadurch gekennzeichnet, dass**
zwischen zweiten Richtkopplers (R2) und dem Empfänger (E) ein Begrenzungsbauteil (D3) geschaltet ist.

8. Sende-/Empfangseinrichtung nach Anspruch 7,
**dadurch gekennzeichnet, dass**
zwischen dem Begrenzungsbauteil (D3) und dem Empfänger (E) ein zweiter Schalter (S2) geschaltet ist.

9. Sende-/Empfangseinrichtung nach einem der vorangehenden Ansprüche,
**dadurch gekennzeichnet, dass**
zwischen dem ersten Richtkoppler (R1) und der Antenne (A) ein dritter Schalter (S3) geschaltet ist.

## Claims

1. Transceiver for RF signals comprising an antenna (A), a transmitter (S) and a receiver (E), and a device (R1) for switching between the transmitter (S) and the receiver (E), wherein a first directional coupler (R1) is connected between the transmitter (S) and the receiver (E) and the antenna (A), wherein a first port (11) of the first directional coupler (R1) is connected to the transmitter (S), a second port (12) of the first directional coupler (R1) is connected to the antenna (A), a third port (13) of the first directional coupler (R1) is connected to a first detector (D1), and a fourth port (14) of the first directional coupler (R1) is connected to the receiver (E), wherein the first port (11) and the second port (12) and also the third port (13) and the fourth port (14) of the first directional coupler (R1) in each case form a main branch and the first port (11) and the third port (13) and also the second port (12) and the fourth port (14) of the first directional coupler (R1) in each case form a coupling branch,
**characterized in that**
a second directional coupler (R2) is connected between the fourth port (14) of the first directional coupler (R1) and the receiver (E), wherein the fourth port (14) of the first directional coupler (R1) is connected to the first port (21) of the second directional coupler (R2), the second port (22) of the second directional coupler (R2) is connected to the receiver (E), the third port (23) of the second directional coupler (R2) is connected to a terminating impedance (RR), and the fourth port (24) of the second directional coupler (R2) is connected to a second detector (D2),
wherein the first port (21) and the second port (22) and also the third port (23) and the fourth port (24) of the second directional coupler (R2) in each case form a main branch and the first port (21) and the fourth port (24) and also the second port (22) and the third port (23) of the second directional coupler (R2) in each case form a coupling branch.

2. Transceiver according to Claim 1,
**characterized in that**
a power amplifier (LV1) is connected between the transmitter (S) and the first directional coupler (R1).

3. Transceiver according to one of Claims 1 and 2,
**characterized in that**
a control circuit (RS) is provided, and is connected to the first detector (D1) and the second detector (D2).

4. Transceiver according to Claims 2 and 3,
**characterized in that**
a first signal line (SL1) is provided between the control circuit (RS) and the power amplifier (LV1).

5. Transceiver according to one of Claims 2 to 4,
**characterized in that**
a first switch (S1) is provided between the transmitter (S) and the power amplifier (LV1).

6. Transceiver according to Claims 3 and 5,
**characterized in that**
a second signal line (SL2) is provided between the control circuit (RS) and the first switch (S1).

7. Transceiver according to one of Claims 1 to 6,
**characterized in that**
a limiting component (D3) is connected between the second directional coupler (R2) and the receiver (E).

8. Transceiver according to Claim 7,
**characterized in that**
a second switch (S2) is connected between the limiting component (D3) and the receiver (E).

9. Transceiver according to one of the preceding claims,
**characterized in that**
a third switch (S3) is connected between the first directional coupler (R1) and the antenna (A).

## Revendications

1. Dispositif d'émission/réception de signaux HF comprenant une antenne (A), un émetteur (S) et un récepteur (E) ainsi qu'un dispositif (R1) pour permuter entre l'émetteur (S) et le récepteur (E), un premier coupleur directionnel (R1) étant branché entre l'émetteur (S) et le récepteur (E) et l'antenne (A), une première porte (11) du premier coupleur directionnel (R1) étant reliée avec l'émetteur (S), une deuxième porte (12) du premier coupleur directionnel (R1) étant reliée avec l'antenne (A), une troisième porte (13) du premier coupleur directionnel (R1) étant reliée avec un premier détecteur (D1) et une quatrième porte (14) du premier coupleur directionnel (R1) étant reliée avec le récepteur (E), la première porte (11) et la deuxième porte (12) ainsi que la troisième porte (13) et la quatrième porte (14) du premier coupleur directionnel (R1) formant à chaque fois une branche principale et la première porte (11) et la troisième porte (13) ainsi que la deuxième porte (12) et la quatrième porte (14) du premier coupleur directionnel (R1) formant à chaque fois une branche de couplage, **caractérisé en ce**
**qu'**un deuxième coupleur directionnel (R2) est branché entre la quatrième porte (14) du premier coupleur directionnel (R1) et le récepteur (E), la quatrième porte (14) premier coupleur directionnel (R1) étant reliée avec la première porte (21) du deuxième coupleur directionnel (R2), la deuxième porte (22) du deuxième coupleur directionnel (R2) étant reliée avec le récepteur (E), la troisième porte (23) du deuxième coupleur directionnel (R2) avec une résistance de terminaison (RR) et la quatrième porte (24) du deuxième coupleur directionnel (R2) étant reliée avec un deuxième détecteur (D2),
la première porte (21) et la deuxième porte (22) ainsi que la troisième porte (23) et la quatrième porte (24) du deuxième coupleur directionnel (R2) formant à chaque fois une branche principale et la première porte (21) et la quatrième porte (24) ainsi que la deuxième porte (22) et la troisième porte (23) du deuxième coupleur directionnel (R2) formant à chaque fois une branche de couplage.

2. Dispositif d'émission/réception selon la revendication 1, **caractérisé en ce qu'**un amplificateur de puissance (LV1) est branché entre l'émetteur (S) et le premier coupleur directionnel (R1).

3. Dispositif d'émission/réception selon l'une des revendications 1 et 2, **caractérisé en ce qu'**il existe un circuit de régulation (RS) qui est relié avec le premier détecteur (D1) et le deuxième détecteur (D2).

4. Dispositif d'émission/réception selon les revendications 2 et 3, **caractérisé en ce qu'**il existe une première ligne de signal (SL1) entre le circuit de régulation (RS) et l'amplificateur de puissance (LV1).

5. Dispositif d'émission/réception selon l'une des revendications 2 à 4, **caractérisé en ce qu'**il existe un premier commutateur (S1) entre l'émetteur (S) et l'amplificateur de puissance (LV1).

6. Dispositif d'émission/réception selon les revendications 3 et 5, **caractérisé en ce qu'**il existe une deuxième ligne de signal (SL2) entre le circuit de régulation (RS) et le premier commutateur (S1).

7. Dispositif d'émission/réception selon l'une des revendications 1 à 6, **caractérisé en ce qu'**un composant de limitation (D3) est branché entre le deuxième coupleur directionnel (R2) et le récepteur (E).

8. Dispositif d'émission/réception selon la revendication 7, **caractérisé en ce qu'**un deuxième commutateur (S2) est branché entre le composant de limitation (D3) et le récepteur (E).

9. Dispositif d'émission/réception selon l'une des revendications précédentes, **caractérisé en ce qu'**un troisième commutateur (S3) est branché entre le premier coupleur directionnel (R1) et l'antenne (A).
